# FASCICULE DE BREVET EUROPEEN

(11) **EP 1 979 625 B1**
(45) Date de publication et mention de la délivrance du brevet: **27.07.2016**
(21) Numéro de dépôt: 07730851.8
(22) Date de dépôt: 24.01.2007
(51) Int. Cl.: F15B 11/05

(54) **DISPOSITIF DE COMMANDE D'UN CIRCUIT CONSOMMATEUR DE GAZ COMPRIME ET GENERATEUR DE VIDE FAISANT APPLICATION**
VORRICHTUNG ZUR STEUERUNG EINER SCHALTUNG MIT DRUCKGASVERBRAUCH UND VAKUUMERZEUGER DAMIT
DEVICE FOR CONTROLLING A COMPRESSED GAS CONSUMING CIRCUIT AND VACUUM GENERATOR USING SAME

(30) Priorité: 30.01.2006 FR 0600807
(43) Date de publication de la demande: 15.10.2008
(73) Titulaire: Coval, 26120 Montelier (FR)
(72) Inventeur: CECCHIN, Michel, F-26120 Montelier (FR); MILHAU, Pierre, F-26300 Charpey (FR); ORIEUX, Stéphane, F-31400 Toulouse (FR); BALDAS, Lucien, F-31320 Castanet Tolosan (FR); BOUTEILLE, Daniel, F-78220 Viroflay (FR)
(74) Mandataire: Robert, Jean-Pierre
(86) Numéro de dépôt international: PCT/FR2007/000133
(87) Numéro de publication internationale: WO 2007/088262

(56) Documents cités:
- EP-A2- 1 253 326
- DE-A1- 2 506 923
- JP-A- 4 164 200
- JP-A- 61 055 400
- US-A1- 2004 094 979

## Description

La présente invention concerne un dispositif de commande de l'ouverture et de l'interruption d'un circuit consommateur d'air comprimé.

Un tel circuit peut aboutir par exemple à un actionneur pneumatique ou à une soufflette, un amplificateur d'air ou, surtout, à une source d'aspiration (vide) par effet venturi.

### ARRIERE PLAN DE L'INVENTION

Les dispositifs de commande connus (voir US2004 094979) comportent une vanne à deux positions qui relient l'appareil consommateur à une source d'air comprimé dans un premier état de la vanne et qui l'en isole dans un second état. Cette vanne est classiquement une vanne pilotée pneumatiquement, le circuit pneumatique de commande comprenant une électrovanne de pilotage à deux positions et trois orifices (électrovanne 3/2), à savoir l'orifice de pression, l'orifice de sortie (en direction de la vanne pilotée) et l'orifice d'échappement. Pour assurer une communication sélective de l'orifice de sortie avec l'un et l'autre des orifices de pression et d'échappement, il faut mettre en oeuvre deux sièges s'il s'agit d'une valve à clapet. Cette disposition technologique est coûteuse et en outre se prête mal à une miniaturisation poussée ou à une adaptation aux faibles niveaux de courant des circuits électroniques qui appartiennent à la commande électrique de l'électrovanne de pilotage.

### OBJET DE L'INVENTION

La présente invention est une solution à la commande de l'ouverture ou de la fermeture d'un circuit consommateur d'air comprimé, plus adaptée aux besoins de plus en plus pressants de miniaturisation et de faible coût.

### RESUME DE L'INVENTION

A cet effet l'invention a donc pour un premier objet un dispositif de commande de l'ouverture et des l'interruption d'un circuit consommateur de gaz comprimé comportant une vanne de coupure à deux états, normalement fermée, ladite vanne de coupure comportant une chambre de pilotage et une chambre de contre-pilotage, en communication permanente avec une source de gaz comprimé, directement pour la chambre de pilotage et par l'intermédiaire d'une restriction pour la chambre de contre-pilotage, cette dernière comportant une dérivation de purge ouverte ou fermée par une vanne de pilotage à deux orifices et deux positions.

Une telle vanne de pilotage à deux orifices et deux positions est de fabrication beaucoup plus économique qu'une vanne à trois orifices et deux postions, puisque dans le cas d'une vanne à clapet, elle ne met en oeuvre qu'un seul siège.

La vanne de pilotage qui est de manière préférée une électrovanne, est à une position stable, laquelle pouvant être soit la position d'ouverture de la purge, soit la position d'obturation de cette dernière, selon que l'on souhaite qu'en cas de défaut d'alimentation électrique, le circuit consommateur de gaz soit respectivement ouvert ou fermé.

Un second objet de l'invention est un générateur de vide qui comprend dans un corps :
- une buse et un mélangeur coaxiaux,
- une chambre d'aspiration entre la buse et le mélangeur constituant la source de vide dans laquelle débouche un canal d'aspiration,
- un dispositif de commande selon le premier objet de l'invention. Dans ce cas, la vanne de coupure est avantageusement une vanne à clapet normalement maintenu appliqué sur un siège, le clapet présentant par ailleurs deux surfaces de pilotage opposées, l'une soumise à la pression régnant dans la chambre de pilotage et l'autre, opposée, soumise à la pression régnant dans la chambre de contre-pilotage, de sorte qu'en cas d'égalité de pression, le clapet est maintenu en application sur son siège tandis que la dérivation de purge comporte un siège coaxial au siège de la vanne de coupure, en regard duquel un clapet est monté mobile entre une position éloignée et une position au contact du siège, le clapet étant solidaire du noyau mobile d'un actionneur électromagnétique.

L'encombrement transversal d'un tel appareil est dicté par les moyens assurant l'effet venturi. La vanne de coupure et l'électrovanne de pilotage de cette dernière selon l'invention peuvent avantageusement être logées dans un encombrement au plus égal à celui du venturi, si bien que des blocs regroupant plusieurs venturis de performances complémentaires peuvent être rendus compacts et de fabrication économique.

Dans une variante de réalisation du générateur de l'invention, celui-ci comporte un canal de soufflage d**'**air comprimé dans le canal d'aspiration, ce canal de soufflage comportant lui-même une vanne de coupure normalement fermée, équipée d'un dispositif de commande conforme au premier objet de l'invention énoncé ci-dessus.

D'autres caractéristiques et avantages de l'invention ressortiront de la description donnée ci-après de quelques exemples de sa réalisation.

### BREVE DESCRIPTION DES DESSINS

Il sera fait référence aux dessins annexés parmi lesquels
- la figure 1 est un schéma fonctionnel du dispositif de commande de l'invention,
- la figure 2 illustre un mode de réalisation du dispositif conforme au schéma fonctionnel de la figure 1,
- la figure 3 illustre un générateur de vide conforme à l'invention,
- la figure 4 illustre un détail d'une variante de réalisation du générateur de la figure 3,
- la figure 5 illustre un générateur de vide conforme à l'invention équipé d'un canal de soufflage.

### DESCRIPTION DETAILLEE DE L'INVENTION

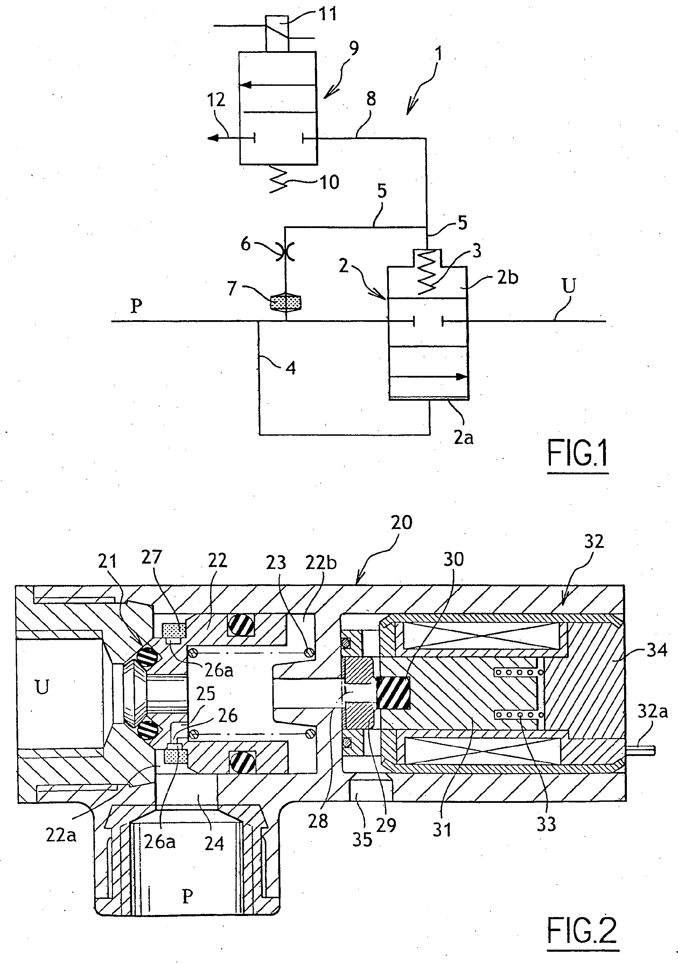

A la figure 1, on a représenté en U un circuit consommateur de gaz comprimé et en P l'extrémité d'une source de gaz sous pression. Le dispositif de commande 1 selon l'invention se compose d'une vanne de coupure 2 à deux positions et deux orifices, avec un état stable correspondant à l'obturation de la communication entre la source P et le circuit U (celle représentée), état stable obtenu et maintenu notamment par l'effet d'un ressort 3 intégré à la vanne.

Cette vanne comporte une chambre de pilotage 2a et une chambre de contre-pilotage 2b chacune étant reliée en permanence à la source de pression P. Plus exactement, la chambre de pilotage 2a est alimentée en permanence en fluide sous pression par un canal de pilotage 4, tandis que la chambre de contre-pilotage 2b est alimentée en permanence en fluide sous pression par un canal de contre-pilotage 5 sur lequel une restriction 6 est montée de même qu'un filtre 7.

La chambre de contre-pilotage 2b comporte un canal de purge 8 sur lequel est montée une électrovanne 9 à deux orifices et deux positions dont une position stable est obtenue sous l'action d'un ressort 10 en l'absence d'excitation de l'électrovanne, cette position stable ici étant la position d'obturation du canal de purge 8. Dans sa deuxième position, l'électrovalve 9 est déplacée à l'encontre de l'effet du ressort 10 par un actionneur électromagnétique 11 de sorte que dans cette seconde position l'électrovanne 9 met le canal de purge 8 à l'échappement 12.

Tel que représenté, le circuit consommateur de gaz comprimé est isolé de la source de pression P. Les deux chambres de pilotage 2a et 2b sont à la même pression, celle de la source de fluide sous pression, et, comme les surfaces exposées à cette pression sont identiques, le ressort 3 est prépondérant et maintient la vanne 2 dans sa position d'obturation. Le même résultat est obtenu sans ressort si la pression de contre-pilotage engendre sur la pièce mobile de la vanne 2 une force supérieure à la pression de pilotage (la même en l'occurence). Un signal électrique de commande est transmis à l'actionneur électromagnétique 11 de l'électrovanne 9 et la fait changer d'état. Il se produit une purge au moins partielle de la chambre de contre-pilotage 2b avec une chute de pression correspondante. La pression dans la chambre de pilotage 2a devient prépondérante, surmonte l'effort du ressort 3 et la vanne 2 change d'état. Le circuit consommateur de gaz comprimé U est donc connecté à la source P. Pendant toute cette période, il se produit une fuite de gaz au travers du conduit 5 et de la purge 8. Cette fuite est cependant réduite du fait même de la restriction 6 dont la section de passage est très inférieure à celle du conduit 8. Lorsqu'on cesse d'alimenter l'électrovanne, 9, celle-ci revient dans sa position d'obturation du conduit 8. La pression est restaurée dans la chambre de contre-pilotage 2b qui vient contrer, avec la force du ressort, celle de la chambre de pilotage 2a pour placer la vanne 2 dans sa position d'obturation.

A la figure 2 on a représenté un mode de réalisation d'un dispositif conforme au schéma fonctionnel de la figure 1, qui comporte un corps 20. Ce corps 20 est équipé d'un siège 21 sur lequel un clapet 22 vient prendre appui sous l'effet d'un ressort 23. Le siège 21 est ménagé dans un insert rapporté dans le corps 20 par exemple par cramponnage, ledit insert définissant un élément de raccordement au circuit consommateur de gaz comprimé.

Par un embout latéral du corps 20, le dispositif peut être connecté par tous moyens appropriés à la source de pression P. Cette source de pression alimente par un conduit 24 une chambre 22a qui constitue une chambre de pilotage du clapet 22. Cette chambre 22a, donc le conduit 24, communique avec une chambre 22b de contre-pilotage du clapet 22 par l'intermédiaire d'un canal 25 ménagé dans le corps même du clapet 22. Ce canal 25 de contre-pilotage possède une restriction 26, une gorge 26a du clapet 22 de laquelle est issue la restriction 26, et un filtre 27 recouvrant la gorge 26a. Le rôle de ce filtre est d'éviter un bouchage de la restriction par une impureté du fluide sous pression.

La chambre de contre-pilotage 22b communique avec l'atmosphère par l'intermédiaire d'un canal de purge 28 traversant un siège 29 qui est obturable par un clapet 30. Ce clapet 30 est porté par le noyau mobile 31 d'une électrovanne 32 et repose sur le siège 29 sous l'effet d'un ressort de rappel 33 placé entre le noyau plongeur 31 et une culasse 34 de l'électrovanne. Une alimentation électrique de cette électrovanne tend à ramener le noyau 31 contre la culasse 34 à l'encontre de l'effet du ressort 33, décollant ainsi le clapet 30 du siège 29. C'est ainsi que l'on purge la chambre de contre-pilotage 22b. On aura noté en 32a une borne de connexion électrique de l'électrovanne. L'échappement de l'électrovanne est noté 35 sur la figure 2.

En l'absence d'excitation de l'électrovanne 32, la pression P règne dans la chambre 22a et dans la chambre 22b. Les surfaces du clapet 22 exposées à la pression de la chambre 22b sont supérieures aux surfaces de ce clapet exposé à la pression de la chambre 22a. Il s'ensuit que le clapet à l'aide en outre de l'effet du ressort 23 est plaqué contre son siège 21 et que la communication P - U est interrompue. Une alimentation de l'électrovanne 32 soulève le clapet 30 de son siège 29 et place la chambre 22b en communication avec l'échappement 35. Il se produit donc une chute de pression dans la chambre 22b, même si une alimentation de celle-ci persiste au travers du canal 25 et de la restriction 26 dont la section de passage est très nettement inférieure à celle du canal 28 du siège 29. La pression dans la chambre 22a exerce donc une force sur le clapet 22 qui est capable de déplacer celui-ci même à l'encontre du ressort 23 du ressort de rappel. Dans ces conditions, le clapet 22 est décollé de son siège 21 et la communication est établie entre la source de pression P et le canal U consommateur de gaz sous pression. Lorsque l'on cesse d'alimenter l'électrovanne 22, le clapet 30 se referme et la pression dans la chambre 22b se restaure progressivement et la force du ressort 23 sur le clapet 22 redevient prépondérante et conduit à replaquer le clapet sur son siège 21. Dans ces conditions, la communication P - U est de nouveau interrompue.

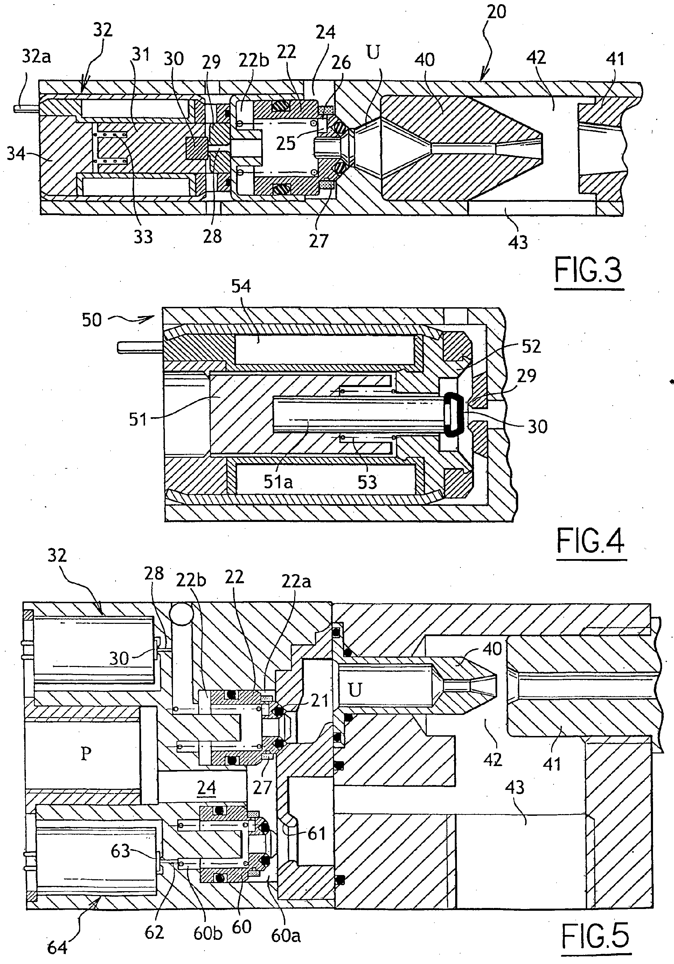

On retrouve à la figure 3 la plupart des éléments déjà décrits en regard de la figure 2 avec les mêmes références, cette figure 3 illustrant un générateur de vide. En effet, au-delà du siège 21, le circuit U consommateur de pression est formé par une buse 40, un "mélangeur" 41, terme consacré dans le domaine, éloigné de la buse 40, donnant ainsi naissance à un effet venturi qui a pour conséquence la création d'une dépression dans la chambre 42 disposée entre la buse et le mélangeur. Cette chambre 42 est le générateur de vide pour un canal d'aspiration 43, connecté par exemple de manière connue à une ventouse.

L'intérêt du dispositif de commande selon l'invention appliqué à un générateur de vide est que la consommation en air comprimé du dispositif de commande ne s'opère que lorsque le générateur de vide consomme également de l'air comprimé. Comme cette consommation par le dispositif de commande est très inférieure à la consommation d'air comprimé nécessaire pour engendrer le vide, cet "inconvénient" né de cette consommation est totalement acceptable dans le cas d'espèce. En outre, on notera que l'ensemble des pièces fonctionnelles est logé dans le corps 20 selon une direction unique qui est celle de leur axe commun. Si le corps 20 est en matériau plastique, on peut loger par cramponnage l'insert formant la buse 40 et le mélangeur 41 par une extrémité du corps 20 puis le clapet 22, le siège 29 et l'électrovanne 32 par l'autre extrémité ouverte de ce corps 20. Cette conception simplifie considérablement la fabrication de l'appareil.

On constate, à la figure 3, qu'en l'absence d'alimentation de l'électrovanne 32, le clapet 30 repose sur le siège 29 poussé par le ressort 33 et isole la chambre de pilotage 22b de l'échappement. Dans cette configuration, le clapet 22 est forcé contre son siège 21 et le venturi est isolé de l'alimentation en gaz comprimé. Dans certaines applications, il est souhaité, voir utile, que l'aspiration réalisée par le venturi perdure notamment lors d'une panne de courant électrique. Il faut alors que la chambre de pilotage 22b soit en communication avec l'échappement en l'absence d'alimentation de l'électrovanne de pilotage. La figure 4 illustre une électrovanne 50 de ce type. Elle est représentée non alimentée et le clapet 30 est éloigné du siège 29. En effet, ce clapet 30 est solidaire d'un noyau plongeur 51 par une tige amagnétique 51a qui, en l'absence d'alimentation, est éloigné de la culasse 52 par un ressort 53. L'alimentation de la bobine 54 de l'électrovanne 50 attire le noyau plongeur 51 en direction de la culasse 52 et plaque le clapet 30 contre le siège 29. Ainsi, avec une électrovanne normalement ouverte, la vanne de coupure de l'alimentation du venturi est ouverte en cas de défaut d'alimentation électrique et est fermée lorsque l'alimentation électrique de l'électrovanne 40 est assurée.

A la figure 5 enfin, on retrouve la plupart des éléments déjà décrits en regard de la figure 3 avec les mêmes références. Le conduit 24 d'alimentation en gaz comprimé de la chambre de pilotage 2a du clapet 22 débouche également dans une chambre de pilotage 60a d'un clapet 60 qui coopère avec un siège 61 au travers duquel, lorsque le clapet 60 en est éloigné, le gaz comprimé peut atteindre le conduit d'aspiration 43.

Le clapet 60 est identique au clapet 22 avec une chambre de contre-pilotage 60b qui peut être mise à l'échappement par l'ouverture d'un conduit de purge 62. Cette ouverture est obtenue par déplacement d'un clapet 63 d'une électrovanne de pilotage 64 semblable à l'électrovalve de pilotage 32 qui assure la communication entre la source de pression P et les composants 40 et 41 définissant la chambre d'aspiration 42.

On comprend que par une commande séquentielle des électrovannes 32 et 64, soit on crée dans le conduit d'aspiration 43 une dépression qui permet à une ventouse de prendre en charge une pièce, soit on crée dans ce conduit 43 une surpression qui permet de chasser rapidement la pièce préalablement saisie par la ventouse.

## Revendications

1. Dispositif de commande de l'ouverture et de l'interruption d'un circuit (U) consommateur de gaz comprimé comprenant une vanne (2) de coupure à deux positions, normalement fermée, ladite vanne (2) de coupure comportant une chambre de pilotage (2a) et une chambre de contre-pilotage (2b) en communication permanente avec une source (P) de gaz comprimé, directement pour la chambre de pilotage (2a) et par l'intermédiaire d'une restriction (6) pour la chambre de contre-pilotage (2b), cette dernière comportant une dérivation de purge (8) ouverte ou fermée par une vanne (9) de pilotage à deux orifices et deux positions.

2. Dispositif selon la revendication 1, **caractérisé en ce que** la vanne de purge (9) du canal de contre-pilotage (8) est une électrovanne à une position stable.

3. Dispositif selon la revendication 2, **caractérisé en ce que** la position stable est la position d'obturation du canal (8).

4. Dispositif selon la revendication 2, **caractérisé en ce que** la position stable de l'électrovanne est la position d'ouverture de ce canal (8).

5. Générateur de vide comportant dans un corps (20) **:**
- une buse (40) et un mélangeur (41) coaxiaux,
- une chambre d'aspiration (42) entre la buse et le mélangeur, constituant la source de vide dans laquelle débouche un canal d'aspiration (43),
- un dispositif de commande selon l'une des revendications précédentes de l'alimentation de la buse (40) en gaz comprimé,
**caractérisé en ce que** la vanne de coupure est une vanne à clapet (22) normalement maintenue appliqué sur un siège (21), le clapet (22) présentant par ailleurs deux surfaces de pilotage opposées, l'une soumise à la pression régnant dans la chambre (22a) de pilotage, et l'autre opposée soumise à la pression régnant dans la chambre (22b) de contre-pilotage, de sorte qu'en cas d'égalité de pression, le clapet (22) est maintenu en application sur son siège (21) et **en ce que** la dérivation de purge (28) comporte un siège (29) coaxial au siège (21) de la vanne de coupure, en regard duquel un clapet (30) est monté mobile entre une position éloignée et une position au contact du siège (29), le clapet (30) étant solidaire du noyau mobile (31) d'un actionneur électromagnétique (32).

6. Générateur de vide selon la revendication 5, **caractérisé en ce que** le noyau mobile (51) est maintenu écarté du siège (29) en l'absence d'alimentation électrique de l'actionneur (50).

7. Générateur de vide selon la revendication 5, **caractérisé en ce que** le noyau mobile (31) est maintenu rapproché du siège (29) en l'absence d'alimentation électrique de l'actionneur (32).

8. Générateur selon l'une des revendications 5 à 7, comportant un canal de soufflage d'air comprimé dans le canal (43) d'aspiration, **caractérisé en ce que** ce canal de soufflage comporte une vanne de coupure (60, 61) normalement fermée, équipée d'un dispositif de commande conforme à l'une des revendications 1 à 3 précédentes.

## Patentansprüche

1. Vorrichtung zur Steuerung der Öffnung und der Unterbrechung eines Druckgasverbraucherkreises (U), umfassend ein Absperrventil (2) mit zwei Positionen, das normalerweise geschlossen ist, wobei das Absperrventil (2) eine Steuerkammer (2a) und eine Gegensteuerkammer (2b) in ständiger Verbindung mit einer Druckgasquelle (P) umfasst, direkt im Falle der Steuerkammer (2a) und über eine Drosselung (6) im Falle der Gegensteuerkammer (2b), wobei diese letzte eine Ablassleitung (8) umfasst, die von einem Steuerventil (9) mit zwei Öffnungen und zwei Positionen geöffnet oder geschlossen wird.

2. Vorrichtung nach Anspruch 1, **dadurch gekennzeichnet, dass** das Ablassventil (9) des Gegensteuerkanals (8) ein Magnetventil mit einer stabilen Position ist.

3. Vorrichtung nach Anspruch 2, **dadurch gekennzeichnet, dass** die stabile Position die Verschließposition des Kanals (8) ist.

4. Vorrichtung nach Anspruch 2, **dadurch gekennzeichnet, dass** die stabile Position des Magnetventils die Öffnungsposition dieses Kanals (8) ist.

5. Vakuumerzeuger, umfassend in einem Gehäuse (20):
- eine Düse (40) und einen Mischer (41), die koaxial angeordnet sind,
- eine Ansaugkammer (42) zwischen der Düse und dem Mischer, die die Vakuumquelle bildet, in die ein Saugkanal (43) mündet,
- eine Steuervorrichtung nach einem der vorhergehenden Ansprüche zur Versorgung der Düse (40) mit Druckgas,
**dadurch gekennzeichnet, dass** das Absperrventil ein Klappenventil (22) ist, das normalerweise anliegend auf einem Sitz (21) gehalten wird, wobei die Klappe (22) ferner zwei entgegengesetzte Steuerflächen aufweist, von denen eine dem Druck ausgesetzt ist, der in der Steuerkammer (22a) herrscht, und die entgegengesetzte andere dem Druck ausgesetzt ist, der in der Gegensteuerkammer (22b) herrscht, derart, dass im Falle einer Druckgleichheit die Klappe (22) in Anlage auf ihrem Sitz (21) gehalten wird, und dass die Ablassleitung (28) einen zum Sitz (21) des Absperrventils koaxialen Sitz (29) umfasst, gegenüber dem eine Klappe (30) beweglich zwischen einer entfernten Position und einer Position in Kontakt mit dem Sitz (29) gelagert ist, wobei die Klappe (30) fest mit dem beweglichen Kern (31) eines elektromagnetischen Aktors (32) verbunden ist.

6. Vakuumerzeuger nach Anspruch 5, **dadurch gekennzeichnet, dass** der bewegliche Kern (51) bei fehlender elektrischer Versorgung des Aktors (50) beabstandet zu dem Sitz (29) gehalten wird.

7. Vakuumerzeuger nach Anspruch 5, **dadurch gekennzeichnet, dass** der bewegliche Kern (31) bei fehlender elektrischer Versorgung des Aktors (32) am Sitz (29) anliegend gehalten wird.

8. Erzeuger nach einem der Ansprüche 5 bis 7, umfassend einen Drucklufteinblaskanal zum Einblasen von Druckluft in den Saugkanal (43), **dadurch gekennzeichnet, dass** dieser Einblaskanal ein normalerweise geschlossenes Absperrventil (60, 61) umfasst, das mit einer Steuervorrichtung gemäß einem der vorhergehenden Ansprüche 1 bis 3 ausgestattet ist.

## Claims

1. A device for controlling the opening and closing of a compressed gas consuming circuit (U), the device comprising a normally-closed two-position cutoff valve (2), said cutoff valve (2) having a pilot chamber (2a) and a counter-pilot chamber (2b) permanently in communication with a source (P) of compressed gas, directly for the pilot chamber (2a) and via a constriction (6) for the counter-pilot chamber (2b), the counter-pilot chamber including a purge branch connection (8) that is opened or closed by a two-position, two-port control valve (9).

2. A device according to claim 1, **characterized in that** the purge valve (9) of the counter-pilot channel (8) is a solenoid valve having one stable position.

3. A device according to claim 2, **characterized in that** the stable position is the position for closing the channel (8).

4. A device according to claim 2, **characterized in that** the stable position of the solenoid valve is the position for opening the channel (8).

5. A vacuum generator comprising, in a body (20):
• a nozzle (40) and a mixer (41) on a common axis;
• a suction chamber (42) between the nozzle and the mixer, constituting the vacuum source into which a suction channel (43) opens out; and
• a control device according to any preceding claim for controlling the feeding of compressed gas to the nozzle (40);
the vacuum generator being **characterized in that** the cutoff valve is a valve having a member (22) that is normally held pressed against a seat (21), the valve member (22) also presenting two opposite pilot surfaces, one that is subjected to the pressure that exists in the pilot chamber (22a), and the opposite, other pilot surface being subjected to the pressure that exists in the counter-pilot chamber (22b), such that when the pressures are equal, the valve member (22) is held pressed against its seat (21), and **in that** the purge branch connection (28) includes a seat (29) on the same axis as the seat (21) of the cutoff valve, with a valve member (30) facing said seat and mounted to move between a spaced-apart position and a position in contact with the seat (29), the valve member (30) being secured to the moving core (31) of an electromagnetic actuator (32).

6. A vacuum generator according to claim 5, **characterized in that** the moving core (51) is held apart from the seat (29) in the absence of electricity being fed to the actuator (50).

7. A vacuum generator according to claim 5, **characterized in that** the moving core (31) is held close to the seat (29) in the absence of electricity being fed to the actuator (32).

8. A generator according to any one of claims 5 to 7, including a channel for blowing compressed air into the suction channel (43), the generator being **characterized in that** the blow channel includes a normally closed cutout valve (60, 61), fitted with a control device in accordance with any one of above claims 1 to 3.
